# EUROPÄISCHE PATENTSCHRIFT

(11) **EP 1 509 325 B1**
(45) Veröffentlichungstag und Bekanntmachung des Hinweises auf die Patenterteilung: **19.07.2006**
(21) Anmeldenummer: 03756970.4
(22) Anmeldetag: 02.06.2003
(51) Int. Cl.: B01L 3/02, F16K 31/08, B05B 1/30, G01N 11/10

(54) **VERFAHREN UND VORRICHTUNG ZUR DOSIERUNG VON FLUIDEN**
METHOD AND DEVICE FOR DOSING FLUIDS
PROCEDE ET DISPOSITIF DE DOSAGE DE FLUIDES

(30) Priorität: 06.06.2002 DE 10225171
(43) Veröffentlichungstag der Anmeldung: 02.03.2005
(73) Patentinhaber: Mimidos-Verfahrenstechnik GmbH, 16761 Henningsdorf (DE)
(72) Erfinder: STEUDEL, Uwe, 70839 Gerlingen (DE); MIKOLAJCZAK, Ulf, 03044 Cottbus (DE); KIESEWETTER, Lothar, 12357 Berlin (DE)
(74) Vertreter: Hertin, Paul W.
(86) Internationale Anmeldenummer: PCT/DE2003/001881
(87) Internationale Veröffentlichungsnummer: WO 2003/103837

(56) Entgegenhaltungen:
- EP-A- 1 069 322
- EP-A- 1 099 484
- GB-A- 2 304 686
- US-A- 4 627 272
- US-A1- 2002 177 237

## Beschreibung

Die Erfindung betrifft ein Verfahren und eine Vorrichtung zur Dosierung von Fluiden mit Hilfe einer Dosierkammer mit Zu- und Abführungen und einem sich in der Dosierkammer befindenden magnetisierbaren Schaltkörper zum Verschluss bzw. zur Öffnung der Zu- bzw. Abführungen.

Bekannt sind Vorrichtungen zum Öffnen und dichtem Verschließen einer Abflussöffnung eines Fluidkanals, die unterschiedlichste Verschlusskörper nutzen, wobei diese oft mit einem Anker oder andersartigen starren Gelenken verbunden sind. Mechanische, magnetische oder elektromagnetische Stelleinheiten gewährleisten eine Hubbewegung des Ankers.

In der DE 692 05 191 T2 ist ein Durchflussventil zur Regulierung des Fluidflusses mit variabler Strömung offenbart, das aus einer hydraulischen Drosseleinrichtung und einer elektromagnetischen Betätigungseinrichtung zur Steuerung der Drosseleinheit besteht. Hierbei wird ein bewegbarer Kern aus ferromagnetischem Material innerhalb eines axialen Hohlraumes durch das Magnetfeld einer Spule bewegt. Gleichzeitig ist der Kern mit einer Federeinrichtung verbunden, deren elastische Eigenschaften in Abhängigkeit der Wirkung eines magnetischen Joches gewählt werden und in koaxialer Richtung angeordnet ist. Nachteilig ist hierbei, dass insbesondere die mechanische Wirkung der Federeinrichtung auf den Öffnungs- und Schließprozess des Kerns nur sehr schwer zu bestimmen ist, insbesondere unter Beachtung des Fluiddruckes oder der aktuellen Fluideigenschaften, so dass eine genaue Dosierung der Fluide und damit der Durchflussmenge nicht möglich ist. Ähnliche Vorrichtungen existieren auch für kugelförmige Schaltkörper, wie z.B. in der DE 39 08 859.

Darüber hinaus bleibt bei diesen Erfindungen das tatsächliche Schließ- und Öffnungsverhalten des Ventils verborgen, da die Bewegung des Kerns bzw. des Ventils innerhalb des Hohlraumes unbekannt bleibt.

Neben der Verwendung von Spulen zur Erzeugung elektromagnetischer Felder kann das äußere Magnetfeld im Inneren einer Dosierkammer auch durch Permanentmagnete erzeugt werden. In der DE 40 37 945 C2 ist ein magnetisierbarer Schieber innerhalb einer Kammer als Verschluss offenbart, der durch die Verschiebung von um die Kammer angeordneten Permanentmagneten bewegt werden kann. Die Permanentmagnete werden für die Flüssigkeitsentnahme von Hand längs der Kammerwand bewegt und verschieben hierbei den Schieber in die Öffnungsposition. Eine genaue Dosierung der abgeflossenen Fluide ist mit dieser manuellen Vorrichtung nicht möglich.

Aus der DE 36 33 851 C2 ist ein Verfahren und eine Einrichtung zum Steuern von Sicherheitsventilen bekannt, um in einem Hydrauliksteuerkreis ein Unter- oder Überschreiten des Ansprechdruckes, insbesondere bei langsamen Druckänderungen, innerhalb bestimmter Grenzen zu verhindern. Die Auswertung von in bestimmten Takten gemessenen Drücken bzw. Druckänderungsgeschwindigkeiten wird hierbei mit gespeicherten Kennlinien für den Hub de Ventilverschlusskörpers verglichen und das Schließverhalten der Abflussventile gesteuert. Nachteilig ist hieran jedoch, dass hierbei nur der gemessene Druck innerhalb eines gesamten Systems ausgewertet wird und keine volumenbeeinflussenden Parameter wie, z. B. die tatsächliche Viskosität der Fluide, in die Auswertung mit einfließen, so dass insbesondere Kleinstmengen von Fluiden nicht über separate Ventile dosiert werden können.

In der EP 0 086 442 A1 wird in Figur 1 mit Beschreibung ein elektromagnetisch schaltbares Mikrodosierventil mit einem in einer Dosierkammer angeordneten magnetisierbaren Schaltkörper, zwei Permanentmagneten und einer Magnetspule offenbart.

WO 86/03297 A1 beschreibt ein in ein Ventil integriertes Viskosimeter, das insbesondere einen in einer Ventilkammer beweglichen magnetisierbaren Körper sowie Sensorspulen aufweist.

Aus der Druckschrift DE 38 33 678 A1 ist ein Gerät zum Erkennen des Durchflusses eines viskosen Mediums durch eine Leitung bekannt. Dabei wird ein magnetisierbarer Schaltkörper in einer Ventilkammer gegen eine Feder bewegt und die Auslenkung des Körpers mittels Spulen ermittelt. Die Auslenkung dient als Maß für den integrierten Durchfluss.

In DE 196 09 094 A1 wird bei einer Einrichtung zum Erkennen des Füllstandes der Kartusche einer Dosiereinrichtung aus dem Vergleich von kartuschenspezifischen Druck/Zeitfunktionen als Referenzkennlinien mit gemessenen Druck/Zeitfunktionen auf den jeweiligen Füllstand geschlossen.

Ausgehend von diesem Stand der Technik ist es Aufgabe der vorliegenden Erfindung, ein Verfahren zur Dosierung von Fluiden für definierte Mengen, insbesondere Kleinstmengen, und eine korrespondierende Vorrichtung zur Durchführung des Verfahrens zur Verfügung zu stellen.

Gelöst wird diese Aufgabe durch die Merkmale der Ansprüche 1 und 8.

Durch diese erfindungsgemäßen Maßnahmen wird ein Verfahren und eine Vorrichtung zur Durchführung des Verfahrens zum sequentiellen Dosieren von mit Überdruck beaufschlagten Fluiden mittels eines bistabilen, elektromagnetisch schaltenden Dosierventils mit integriertem Sensor zur Ermittlung rheologischer Fluideigenschaften bereitgestellt. Durch Abschwächung und Verstärkung entgegengesetzt gepolter Permanentmagnetfelder in axialer Richtung, die zwei stabile Lagen innerhalb der Dosierkammer definieren, werden durch eine elektronisch angesteuerte stromdurchflossene Spule diskrete Schaltzustände für einen axial in einer Dosierkammer beweglichen magnetisierbaren Schaltkörper, insbesondere für eine ferromagnetische Kugel, erzeugt und bei der Bewegung des Schaltkörpers in eine stabile Lage eine Spannung in einem Magnetfeldsensor, insbesondere einer Spule, induziert. Der zeitliche Induktionsspannungsverlauf wird anschließend mit einer elektronischen Schaltung bzw. einem Rechner ausgewertet und auf der Basis von Spannungsverläufen von Fluiden bekannter Viskosität die aktuelle Viskosität des Fluides in der Dosierkammer bestimmt. Durch die Messung dieser rheologischen Fluideigenschaften kann über die bekannten Schließ- und Öffnungszeiten der Ventile ein definiertes Fluidvolumen, insbesondere von Kleinstvolumina, dosiert werden.

Hierzu werden die zu dosierenden Fluide unter Druck der Dosierkammer zugeführt, wobei der magnetisierbare Schaltkörper durch einen Schaltungsimpuls derart angeregt wird, dass er sich entweder in die stabile Verschluss- oder Öffnungsposition der Dosierkammer bewegt, und dass das Schaltverhalten des durch die Fluide umströmten, sich bewegenden Schaltkörpers innerhalb der Dosierkammer gemessen wird. Das tatsächliche Schaltverhalten wird mit bekanntem Schaltverhalten des bewegten Schaltkörpers verglichen und somit eine dosierte Abgabe von definierten Fluidmengen, insbesondere Kleinstmengen ermöglicht. Hierbei wird entweder die tatsächliche Viskosität eines Fluides unbekannter Viskosität aus dem Vergleich zwischen dem tatsächlichen Schaltverhalten des bewegten Schaltkörpers und dem vorher bestimmten Schaltverhalten des Schaltkörpers bei Fluiden bekannter Viskosität ermittelt oder einmalig das Schaltverhalten des zu dosierenden Fluides bekannter Viskosität gemessen und als Grundlage für das aktuelle Schaltverhalten des Schaltkörpers zur Dosierung genutzt.

Das Magnetfeld des auslassseitigen Permanentmagneten wird über einen sich verjüngenden Auslassadapter auf die Mitte der Dosierkammer gebündelt, wodurch eine zusätzliche magnetische Zentrierung des Schaltkörpers beim Erreichen der stabilen Verschlussposition erreicht wird. Das dünnwandige Ende des Auslassadapters ist von einer unmagnetischen Hülse umgeben, wobei beide eine kalottenartige Kontur zur Dosierkammer hin aufweisen. In einer weiteren Ausführungsform ist anstatt der unmagnetischen Hülse eine Potentialtopfhülse auf das dünnwandige Ende der Auslassöffnung gepresst. Die Potentialtopfhülse hat zur Kammer ebenfalls eine kalottenartige Kontur mit einer zentrischen Bohrung. Das durch die Verjüngung des Auslassadapters auf die Mitte der Kammer konzentrierte Magnetfeld des Permanentmagneten bildet zusammen mit der Potentialtopfhülse einen sogenannten Potentialtopf. Die magnetische Isolierung durch die Potentialtopfhülse bewirkt, dass der ferromagnetische Schaltkörper nicht direkt auf dem ferromagnetischen Auslassadapter aufliegt und so die Haftkraft in definierter Weise eingestellt werden kann.

Durch Messung der Schaltzeit zwischen dem Schaltungsimpuls und dem Stoppen des Schaltkörpers in einer stabilen Verschluss- oder Öffnungsposition wird hiermit ein eindeutiges Schaltverhalten des Schaltkörpers in Abhängigkeit vom umgebenden Fluid definiert. Bei der Ausführungsform mit auslassseitigem Potentialtopf, ist das Einnehmen der Verschlussposition auch von der Potentialtopfhülse abhängig, da durch die Materialstärke zur Dosierkammer hin, die Haftkraft des Schaltkörpers an der Auslassseite variiert werden kann. Verschmutzungen in der Dosierkammer können durch Änderungen eines bekannten Schaltverhaltens, insbesondere einer Verringerung der Schaltzeiten des Schaltkörpers in Abhängigkeit des umgebenden Fluides detektiert werden.

Ebenfalls kann das Dosierventil aus mehreren separaten Dosierkammern bestehen, deren Zu- und Abführungen durch definiert elastische oder unelastische Kopplungselemente verbunden sind, wobei die Schaltzeiten für jede Dosierkammer einzeln bestimmt werden. Hierbei werden die Dosierkammern phasenversetzt in Abhängigkeit von den elastischen Eigenschaften der Kopplungselemente durch eine Kontrolleinheit (nicht dargestellt) angesteuert. Bei der Einventiltechnik folgt auf einen Einschaltimpuls nach definierter Zeit ein Ausschaltimpuls. Durch Hintereinanderreihung der Dosierkammern, verbunden mit einem definierten elastischen Kopplungselement, z.B. einem elastischen Schlauch definierter Länge und definierter viskoelastischer Eigenschaften, erreicht man durch sequentielles Öffnen und Schließen jeweils nur einer Dosierkammer die Dosierung von Kleinstmengen. Hierbei wird nur noch eine Dosiermenge entsprechend des elastisch verformten Schlauchvolumens aufgrund des Überdrucks auf der Eingangseite für die Dosierung freigegeben, da immer nur ein Ventil offen ist. Eine weitere Möglichkeit ist die Kopplung von mehreren Dosierkammern mit unelastischen Kopplungselementen. Zur Dosierung von Mikromengen werden die Dosierkammern mit einem Phasenversatz angesteuert. Dabei wird zuerst die Dosierkammer auf der Einlassseite geöffnet und anschließend die Dosierkammer auf der Auslassseite. Während die Dosierkammer auf der Auslassseite geöffnet ist, wird durch die Dosierkammer auf der Einlassseite der Fluidstrom unterbrochen.

Der magnetisierbare Schaltkörper besitzt nur zwei stabile Lagen, nämlich nur die Verschluss- oder Öffnungsposition in der Dosierkammer, die auch durch äußere mechanische Einflüsse auf das Dosierventil, wie z.B. durch Stöße oder durch gravitative Kräfte, nicht verändert werden, wobei diese durch mindestens zwei permanente Magnetfelder mit gleichem magnetischem Fluss und gleicher Ausrichtung der Pole in Richtung des Schaltkörpers gewährleistet werden.

Um die Dosierkammer ist eine Spule angeordnet, die ein elektromagnetisches Feld innerhalb der Dosierkammer erzeugt, wobei, in Abhängigkeit von der Stromrichtung in der Spule, der Verlauf des elektromagnetischen Feldes einen Teil der permanenten Magnetfelder abschwächt bzw. verstärkt. Die Stromstärke bzw. Spannung innerhalb der Spule wird so hoch gewählt, dass die durch das elektromagnetische Feld hervorgerufene Abschwächung bzw. Verstärkung des permanenten Magnetfeldes so groß ist, dass der magnetisierbare Schaltkörper entweder nur noch in der Verschlussposition oder in der Öffnungsposition der Dosierkammer eine stabile Lage einnimmt. Weiterhin ist um die Dosierkammer ein Magnetfeldsensor, hier eine Messspule, angeordnet, in der in Abhängigkeit von der Bewegung des magnetisierten Schaltkörpers in eine stabile Lage innerhalb der Dosierkammer eine Spannung induziert wird.

Innerhalb der Messspule wird nur ein sehr kurzzeitiger Strom- bzw. Spannungsstoß induziert und über eine Auswerteeinrichtung (nicht dargestellt) anschließend die Charakteristik des Induktionsspannungsverlaufes in dem Magnetfeldsensor ausgewertet. Die Dauer-Magnetfelder werden durch Permanentmagnete, insbesondere Ringmagnete, erzeugt, wobei die Permanentmagnete um die Dosierkammer angeordnet sind.

Der größte Spannungswert in der Messspule wird erzeugt, wenn der Schaltkörper auf die Adapterflächen auftrifft. Nach einer Verstärkung und Differentiation des induzierten Signals erkennt man das Aufschlagen des Schaltkörpers an einem hohen Spannungsmaximum. Die Zeit vom Beginn des Stromimpulses bis zum ersten Spannungsmaximum entspricht der Öffnungs- bzw. Schließzeit des Ventils. Bei konstantem Druck an der Einlassseite ist die Durchflussmenge nur von der Viskosität des Fluids abhängig. Durch Auswertung der Schaltzeiten lassen sich von einem bekannten Fluid unbekannter Viskosität rheologische Eigenschaften bestimmen, mit deren Kenntnis die aktuelle Viskosität ermittelt werden kann, wenn die Öffnungs- bzw. Schließzeiten in Abhängigkeit von der Viskosität des verwendeten Fluides vorher bekannt sind. Anschließend kann unter Zuhilfenahme der bekannten strömungstechnischen Gesetzmäßigkeiten die Durchflussmenge errechnet werden. Änderungen der Viskosität eines Fluides, zum Beispiel durch Temperaturänderungen, können somit erfasst werden und die Öffnungszeit des Ventils kann, zur Sicherstellung eines konstanten Volumen- oder Massenstromes, entsprechend verstellt werden.

Das Verfahren eignet sich sowohl für reine Fluide, als auch für pigmentierte Fluide. Außerdem kann das Ventil auch zum Mischen mehrerer, durch unterschiedliche Kanäle zugeführter Fluide verwendet werden, wenn der Schaltkörper ständig von einer Endlage in die andere bewegt wird.

Weiterhin kann die Größe der beim Auftreffen des Schaltkörpers auf die Adapter entstehenden induzierten Spannungsmaxima ausgewertet werden. Bei sehr reinen, unpigmentierten Fluiden trifft der Schaltkörper ungedämpft auf die Adapter und es entsteht infolge der sehr großen Geschwindigkeitsänderung des Schaltkörpers ein sehr hohes Spannungsmaximum. Sind die Fluide stark pigmentiert, könnte es zu Ablagerungen im Ventil kommen, die eine starke Dämpfung der Bewegung des Schaltkörpers und damit ein kleineres Spannungsmaximum bewirken. Eine beginnende Verstopfung des Ventils kann so frühzeitig erkannt und geeignete Gegenmaßnahmen, z.B. Spülen des Ventils mit einer Reinigungsflüssigkeit, können eingeleitet werden. Wird gar kein Spannungsmaximum festgestellt, kann man davon ausgehen, dass der Schaltkörper sich nicht bewegt und mit großer Sicherheit eine Störung im System vorliegt.

Weitere vorteilhafte Maßnahmen sind in den übrigen Unteransprüchen beschrieben; die Erfindung wird anhand von Ausführungsbeispielen und der nachfolgenden Figuren näher beschrieben; es zeigt:
- **Fig. 1**: Längsschnitt des Dosierventils mit zentrischen Zu- und Ableitungen;
- **Fig. 2**: Vergrößerter Längsschnitt der Dosierkammer mit zentrischen Zu- und Ableitungen, wobei der verjüngte, dünnwandige Auslassadapter von einer unmagnetischen Hülse umgeben ist
- **Fig. 3**: Vergrößerter Längsschnitt der Dosierkammer mit zentrischen Zu- und Ableitungen in der Ausführungsform mit einem auslassseitigen Potentialtopf
- **Fig. 4**: Längsschnitt des Dosierventils mit axial versetzten Zu- und Ableitungen;
- **Fig. 5**: Längsschnitt des Dosierventils mit zwei hintereinander geschalteten Dosierkammern mit zentrischen Zu- und Ableitungen.
- **Fig. 6**: Öffnungs- und Schließzeit des Ventils ermittelt aus der differenzierten Induktionsspannung in Abhängigkeit von der Zeit

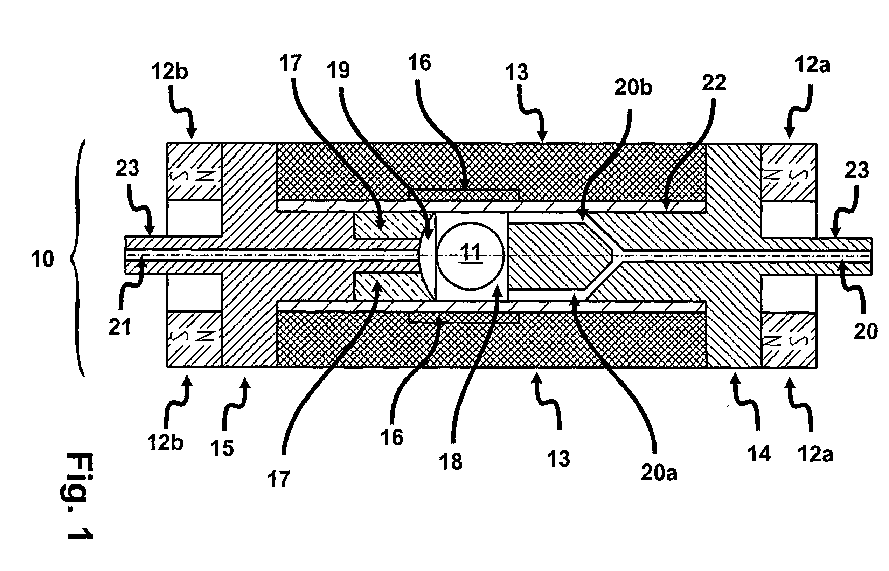

Fig. 1 zeigt ein erfindungsgemäßes Dosierventil 10 mit einer die Dosierkammer 18 umschließenden Spule 13 und einer Durchgangsbohrung 20, in der ein Einlassadapter 14 und ein Auslassadapter 15 eingesetzt sind. Auf die außenliegenden Stirnflächen des Ein- 14 bzw. Auslassadapters 15 werden die Permanentmagnete 12a, 12b, hier Ringpermanentmagnete, in jeweils gleicher Orientierung in Richtung der Dosierkammer 18 aufgesetzt. Der Auslassadapter 15 besitzt einen Auslasskanal 21 der hier als Durchgangsbohrung dargestellt ist. Die Ein- 14 bzw. Auslassadapter 15 verfügen über einen Schlauchanschluss 23. Innerhalb der Dosierkammer 18 befindet sich der magnetisierbare Schaltkörper 11, der in Verschlussstellung in einer kalottenartigen Kontur 19 die Abführung 21 dicht verschließt. Um die Dosierkammer ist ein Magnetfeldsensor 16 angeordnet. Der Einlassadapter 14 besitzt eine zentrale Bohrung im Eingangsbereich, die sich in ein oder mehrere in die Kammer tangential mündende einseitigen Zuführungskanäle 20a, 20b aufspaltet.

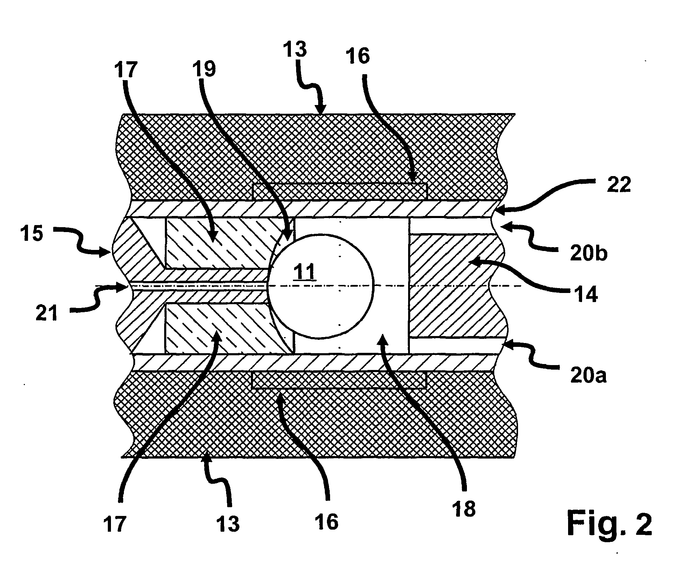

In Fig. 2 ist erkennbar, dass sich auf dem Auslassadapter 15 ein dünnwandiger Befestigungsabsatz befindet, durch den das permanente Magnetfeld derart gebündelt wird, dass die Zentrierung des Schaltkörpers 11 in die kalottenartige Kontur 19 bewirkt wird. Auf den dünnwandigen Befestigungsabsatz des Auslassadapters 15 ist eine unmagnetische Hülse 17 aufgepresst.

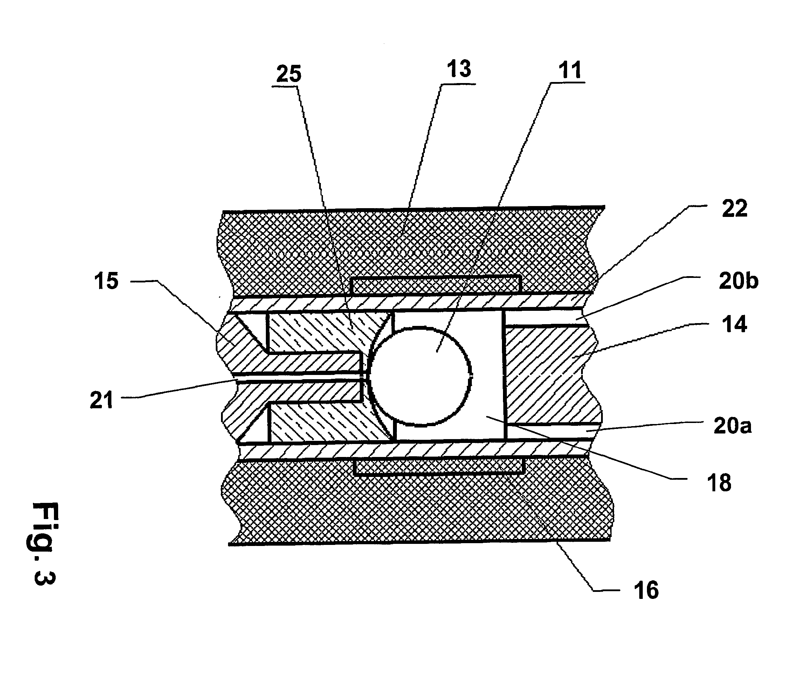

Fig. 3 zeigt eine zu der in Figur 2 veränderte Ausführungsform des Auslassadapters. Eine Potentialtopfhülse 25 ist auf das dünnwandige Ende der Auslassöffnung gepresst. Die Potentialtopfhülse hat zur Kammer eine kalottenartige Kontur mit einer zentrischen Bohrung. Durch die Verjüngung des Auslassadapters auf die Mitte der Kammer wird das Magnetfeld des Permanentmagneten zusammen mit der Potentialtopfhülse konzentriert und bildet einen sogenannten Potentialtopf. Die magnetische Isolierung durch die Potentialtopfhülse bewirkt zudem, dass der ferromagnetische Schaltkörper nicht direkt auf dem ferromagnetischen Auslassadapter aufliegt und so die Haftkraft in definierter Weise eingestellt werden kann, in Abhängigkeit von der Materialstärke der Potentialtopfhülse zur Dosierkammer.

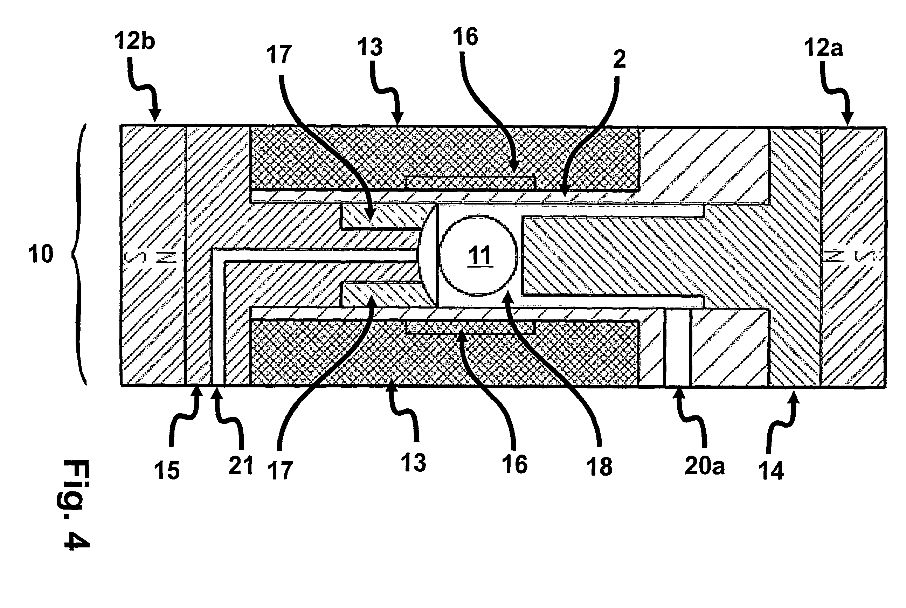

In Fig. 4 ist ein Dosierventil 10 mit seitlicher Fluidzu- 20a und -abführung 21 dargestellt. Im Einlassadapter 14 sind keine Zuflusskanäle mehr vorhanden. Die einseitige Zuführung 20a wird in einem Rohrspalt realisiert. Statt Ringpermanentmagneten können zylindrische Permanentmagneten 12a, 12b als permanente Magnetfelderzeuger verwendet werden.

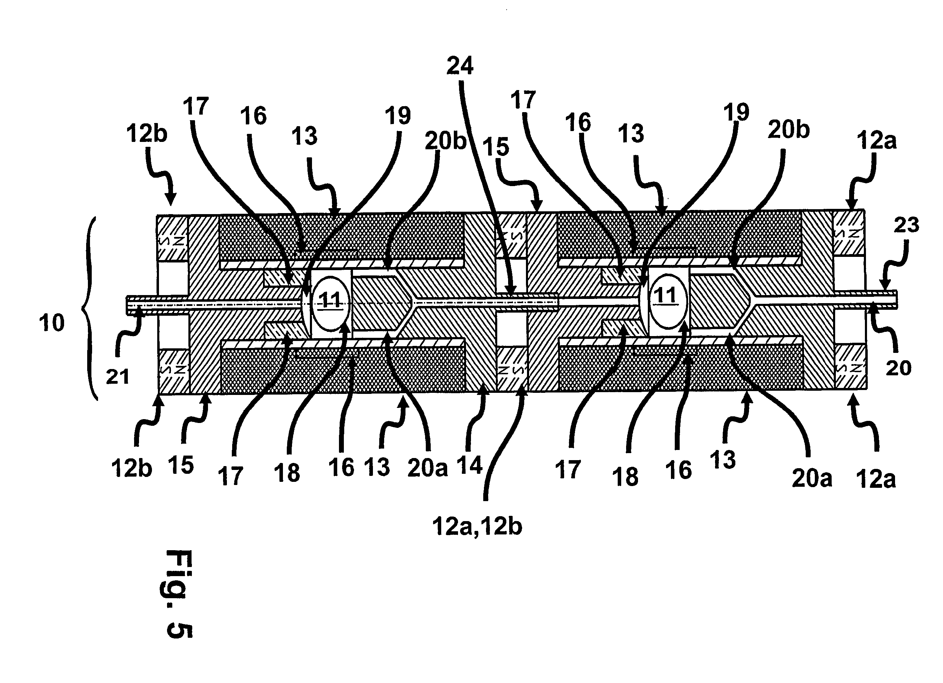

In der Fig. 5 ist ein Dosierventil 10 mit mehreren Dosierkammern 18 dargestellt, wobei die Abführung 21 der rechtsseitigen Dosierkammer 18 mit der Zuführung 20 der linksseitigen Dosierkammer 18 über ein definiert elastisches oder unelastisches Kopplungselement 24 verbunden ist. Hierbei werden die einlassseitigen und auslassseitigen Permanentmagnete 12a, 12b jeweils bezüglich ihrer magnetischen Polung gleich zu einer Dosierkammer 18 ausgerichtet, wobei die Polung für die einzelnen aufeinanderfolgenden Dosierkammern 18 alternierend wechselt. Die Anordnung dient im Besonderen der Realisierung von Mikrodosiermengen, die aufgrund der Schaltzeit innerhalb einer Dosierkammer 18 nur schwer zu realisieren sind. Hierfür wird eine zeitlich versetzte Ansteuerung der beiden Dosierkammern 18 genutzt.

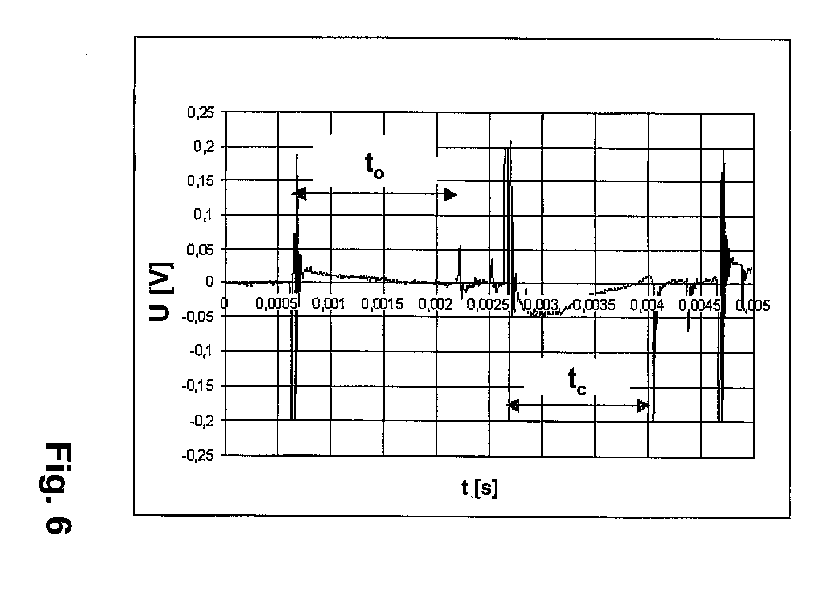

Figur 6 zeigt die differenzierte Induktionsspannung U [Volt] in Abhängigkeit von der Zeit t [s] im Magnetfeldsensor und der daraus ermittelten Öffnungs- (tₒ)- und Schließzeiten (t_{c}) in einem in Figur 1 dargestellten Ventil. Das Auftreffen des Schaltkörpers 11 ist an einem hohen Spannungspeak im differenzierten Sensorspulensignal deutlich erkennbar. Der Spannungspeak kann mittels eines Triggers in einen digitalen Impuls umgewandelt werden, welcher das Ende der Zeitmessung angibt.

### Bezugszeichenliste

10 Dosierventil
11 Schaltkörper
12a einlassseitige Permanentmagnete
12b auslassseitige Permanentmagnete
13 Spule
14 Einlassadapter
15 Auslassadapter
16 Magnetfeldsensor
17 unmagnetische Hülse
18 Dosierkammer
19 kalottenartige Kontur
20 Zuführung
20a einseitiger Zuführungskanal
20a einseitiger Zuführungskanal
21 Abführung
22 Durchgangsbohrung
23 Schlauchanschluss
24 Kopplungselement
25 Potentialtopfhülse

## Patentansprüche

1. Verfahren zur Dosierung von Fluiden, insbesondere von Kleinstmengen, mit Hilfe einer Dosierkammer mit Zu- und Abführungen und einem sich in der Dosierkammer befindenden magnetisierbaren, bewegbaren und bei Bewegung eine Magnetfeldänderung erzeugenden Schaltkörper zum Verschluss bzw. zur Öffnung der Zu- bzw. Abführungen, **dadurch gekennzeichnet, dass**
a) Fluide mit bekannten oder unbekannten rheologischen Eigenschaften unter Druck der Dosierkammer (18) zugeführt werden, und
b) bei gleichbleibendem Druck innerhalb der Zuführung (20) der Dosierkammer (18)
c) die Dosierung der Fluide durch den axial in der Dosierkammer beweglichen Schaltkörper (11) gesteuert wird, indem das zeitliche Schaltverhalten des Schaltkörpers (11) in dem zu dosierenden Fluid gemessen und mit einem Referenz-Schaltverhalten eines Fluids bekannter rheologischer Eigenschaften abgeglichen wird, wobei die vom Schaltkörper (11) hervorgerufene Magnetfeldänderung mit einem Magnetfeldsensor (16) detektiert wird.
d) wobei das Referenz-Schaltverhalten zuvor aus dem zeitlichen Schaltverhalten von bekannten Fluiden mit unterschiedlichen, bekannten rheologischen Eigenschaften oder dem zu dosierenden Fluid bestimmt wird,
e) woraus die tatsächliche Viskosität des zu dosierenden Fluids ermittelt und die Durchflussmenge durch die Dosierkammer (18) und damit die Dosierung gesteuert wird.

2. Verfahren nach Anspruch 2, **dadurch gekennzeichnet, dass** durch Abschwächung und Verstärkung entgegengesetzt gepolter Permanentmagnetfelder, die zwei stabile Lagen innerhalb der Dosierkammer (18) definieren, durch eine elektronisch angesteuerte stromdurchflossene Spule (13) diskrete Schaltzustände für den axial in einer Dosierkammer (18) beweglichen magnetisierbaren Schaltkörper (11) erzeugt werden und bei der Bewegung des Schaltkörpers (11) in eine stabile Lage die vom Schaltkörper (11) hervorgerufene Magnetfeldänderung mit einem Magnetfeldsensor (16) detektiert wird.

3. Verfahren nach Anspruch 1, **dadurch gekennzeichnet, dass** das Schaltverhalten definiert ist durch die Zeit zwischen einem durch die Spule (13) erzeugten elektromagnetischen Schaltungsimpuls und dem Stoppen des Schaltkörpers (11) in einer stabilen Verschluss- oder Öffnungsposition in Abhängigkeit von den in die Dosierkammer (18) eingebrachten Fluiden.

4. Verfahren nach Anspruch 1 oder 3, **dadurch gekennzeichnet, dass** das Schaltverhalten definiert ist durch die Zeit zwischen einem durch die Spule (13) erzeugten elektromagnetischen Schaltungsimpuls und dem Stoppen des Schaltkörpers (11) in einer stabilen Verschluss- oder Öffnungsposition in Abhängigkeit einer auslassseitig an der Abführung (21) angeordneten Potentialtopfhülse (25) mit veränderbarer Materialstärke, die eine korrespondierende veränderbare Haftkraft des Schaltkörpers (11) an der Abführung (21) bewirkt.

5. Verfahren nach den Ansprüchen 1 bis 4, **dadurch gekennzeichnet, dass** Verschmutzungen der Dosierkammer (18) durch Änderungen eines bekannten Schaltverhaltens, insbesondere eine Verringerung der Schaltzeiten und eine Verringerung der Magnetfeldänderung des Schaltkörpers (11) in Abhängigkeit des umgebenden Fluides detektiert werden.

6. Verfahren nach Anspruch 3 oder 4, **dadurch gekennzeichnet, dass** innerhalb der Spule (13) ein sehr kurzzeitiger Strom- bzw. Spannungsstoß erzeugt wird und dass über eine Auswerteeinrichtung die Zeitdauer des definierten Schaltverhaltens zwischen dem Strom- bzw. Spannungsstoß in der Spule (13) und dem Maximum der gemessenen Magnetfeldänderung im Magnetfeldsensor (16) bestimmt wird.

7. Verfahren nach mindestens einem der Ansprüchen 1 bis 6, **dadurch gekennzeichnet, dass** durch eine hochfrequente Anregung der Spule (13) elektromagnetische Felder erzeugt werden, die den Schaltkörper (11) in Schwingungen versetzen, wobei die entstehenden Pralleffekte in der Dosierkammer (18) eine Durchmischung der Fluide bewirken.

8. Vorrichtung zur Dosierung von Fluiden mit einem in einer Zu- und Abführungen (20, 21) aufweisenden Dosierkammer (18) axial beweglich angeordneten durch eine Spule (13) elektromagnetisch schaltbaren Schaltkörper (11), **dadurch gekennzeichnet, dass** der Schaltkörper (11) jeweils nur in die Verschluss- oder Öffnungsposition der Dosierkammer (18) durch Abschwächung und Verstärkung der jeweiligen, entgegengesetzt gepolten von Permanentmagneten (12a, 12b) erzeugten Permanentmagnetfeldem durch die Spule (13) steuerbar ist und dass bei der Bewegung des Schaltkörpers (11) in eine stabile Lage die vom Schaltkörper (11) hervorgerufene Magnetfeldänderung mit einem Magnetfeldsensor (16) detektiert wird.

9. Vorrichtung nach Anspruch 8, **dadurch gekennzeichnet, dass** die Permanentmagnete (12a, 12b) so dimensioniert sind, dass der magnetisierbare Schaltkörper (11) jeweils nur in der Verschluss- oder Öffnungsposition der Dosierkammer (18) eine stabile Lage einnimmt und die stabile Lage des Schaltkörpers (11) durch äußere mechanische Einflüsse auf das Dosierventil (10) unverändert bleibt.

10. Vorrichtung nach Anspruch 8 oder 9, **dadurch gekennzeichnet, dass** der magnetisierbare Schaltkörper eine ferromagnetische Kugel ist.

11. Vorrichtung nach Anspruch 8 oder 9, **dadurch gekennzeichnet, dass** die Permanentmagnete (12a, 12b) Ringmagnete sind.

12. Vorrichtung nach den Ansprüchen 8 bis 11, **dadurch gekennzeichnet, dass** um die Dosierkammer (18) die Spule (13) angeordnet ist und diese ein elektromagnetisches Feld innerhalb der Dosierkammer (18) erzeugt, wobei, in Abhängigkeit von der Stromrichtung in der Spule (13), der Verlauf des elektromagnetischen Feldes einen Teil der Magnetfelder der Permanentmagnete (12a, 12b) abschwächt bzw. verstärkt.

13. Vorrichtung nach den Ansprüchen 8 bis 12, **dadurch gekennzeichnet, dass** um die Dosierkammer (18) ein Magnetfeldsensor (16) angeordnet ist, in dem in Abhängigkeit von der Bewegung des magnetisierten Schaltkörpers (11) in eine stabile Lage innerhalb der Dosierkammer (18) eine Magnetfeldänderung erfasst wird.

14. Vorrichtung nach Anspruch 13, **dadurch gekennzeichnet, dass** der Magnetfedsensor eine Spule ist.

15. Vorrichtung nach mindestens einem der Ansprüchen 8 bis 14, **dadurch gekennzeichnet, dass** das Magnetfeld des auslassseitigen Permanentmagneten (12b) über einen Auslassadapter (15) auf die Mitte der Dosierkammer (18) konzentriert ist und zusammen mit einer unmagnetischen Hülse (17) und dessen kalottenartiger Kontur (19) zur Dosierkammer (18) eine zusätzliche magnetische Zentrierung des Schaltkörpers (11) beim Erreichen der stabilen Verschlussposition in dessen kalottenartiger Kontur (19) bewirkt.

16. Vorrichtung nach mindestens einem der Ansprüchen 8 bis 14, **dadurch gekennzeichnet, dass** das Magnetfeld des auslassseitigen Permanentmagneten (12b) über einen Auslassadapter (15) und einer Potentialtopfhülse (25) kalottenartiger Kontur auf die Mitte der Dosierkammer (18) konzentriert ist und, dass der ferromagnetische Schaltkörper (11) nicht direkt auf dem ferromagnetischen Auslassadapter (15) aufliegt und so die Haftkraft in definierter Weise eingestellt wird.

17. Vorrichtung nach mindestens einem der Ansprüche 8 bis 15, **dadurch gekennzeichnet, dass** das Dosierventil (10) aus mehreren separaten Dosierkammern (18) besteht, deren Zu- (20) und Abführungen (21) durch elastische oder unelastische Kopplungselemente (24) verbunden sind, wobei in den Dosierkammern separat voneinander permanente und elektromagnetische Felder erzeugt und in Abhängigkeit von den elastischen Eigenschaften der Kopplungselemente (24) phasenversetzt angesteuert werden.

## Claims

1. Method for dosing fluids, especially minimal amounts, using a dosing chamber with feedings and eductions and a magnetizable, movable switching body located in the dosing chamber inducing by movement a magnetic field change for closing respectively opening the feedings and eductions, **characterised by**
a) the application of fluids with known or unknown rheological properties under pressure to the dosing chamber (18), and
b) at constant pressure within the feeding (20) of the dosing chamber (18)
c) the dosage of fluids is controlled by the axially, within the dosing chamber movable switching body (11), by measuring the switching time of the switching body (11) within the fluid to be dosed and comparing it to a reference switching behaviour of fluids with known rheological properties, where the magnetic field change induced by the switching body (11) is detected by a magnetic field sensor (16),
d) where the reference switching behaviour is determined before from the switching time of known fluids with different, known rheological properties or from the fluid to be dosed,
e) what from the actual viscosity of the fluid to be dosed is determined and the flow rate through the dosing chamber (18) and by this the dosage is controlled.

2. Method according to claim 2, **characterised by** reducing and amplifying oppositely poled permanent magnetic fields, which define two stable positions inside the dosing chamber (18), by an electronically controlled coil (13) through which current flows discrete switching states for a magnetizable switching body (11), which can axially move inside a dosing chamber (18), are produced, and during movement of the switching body (11) into a stable position, the magnetic field change caused by the switching body (11) is detected by a magnetic field sensor (16).

3. Method according to claim 1, **characterised by** defining the switching behaviour as the time between an electro-magnetic switching pulse caused by the coil (13) and stopping of the switching body (11) in a stable opening or closing position depending on the fluids that are brought in the dosing chamber (18).

4. Method according to claim 1 or 3, **characterised by** defining the switching behaviour as the time between an electro-magnetic switching pulse caused by the coil (13) and stopping of the switching body (11) in a stable opening or closing position depending on a potential well tube (25) with modifiable material thickness arranged on the side of the outlet of the eduction (21), causing a corresponding modifiable adhesive force of the switching body (11) cling to the eduction (21).

5. Method according to the claims 1 to 4, **characterised by** detecting contaminations of the dosing chamber (18) by changes of a known switching behaviour, especially a reduction of the switching time and a reduction of the magnetic field change of the switching body (11) in dependence of the surrounding fluid.

6. Method according to claim 3 or 4, **characterised by** causing a very short current respectively voltage surge within the coil (13) and determining via an analysing device the duration of the defined switching behaviour between the current respectively voltage surge within the coil (13) and the maximum of the measured magnetic field change in the magnetic sensor (16).

7. Method according to at least one of the claims 1 to 6, **characterised by** causing electro-magnetic fields by high-frequency stimulation of the coil (13) putting the switching body (11) in vibrations, where the resulting colliding effects within the dosing chamber (18) result in stirring of the fluids.

8. Device for dosing fluids with an in a dosing chamber (18) having feedings (20) and eductions (21) axially movable arranged, by a coil (13) electro-magnetic switchable switching body (11) **characterised by** a switching body (11) that is only controllable in the closing or opening position of the dosing chamber (18) by reducing or amplifying of the correspondent contrary-poled by permanent magnets (12a, 12b) caused permanent magnetic fields by the coil (13) and by detecting the magnetic field change caused by the switching body (11) during the movement of the switching body (11) in a stable position with a magnetic field sensor (16).

9. Device according to claim 8, **characterised by** permanent magnets (12a, 12b) having dimensions, that the magnetizable switching body (11) takes only a stable position in the closing or opening position of the dosing chamber (18) and the stable position of the switching body (11) remains unchanged by outer mechanical influences on the dosing valve (10).

10. Device according to claim 8 or 9, **characterised by** the magnetizable switching body being a ferromagnetic ball.

11. Device according to claim 8 or 9, **characterised by** permanent magnets (12a, 12b) being toric magnets.

12. Device according to one of the claims 8 to11, **characterised by** the coil (13) arranged around the dosing chamber (18) and an electro-magnetic field induced by it within the dosing chamber (18), where, depending on the direction of the current flow in the coil (13), the distribution of the magnetic field weakens or strengthens parts of the magnetic fields of the permanent magnets (12a, 12b).

13. Device according to claims 8 to 12, **characterised by** a magnetic field sensor (16) arranged around the dosing chamber (18), detecting a magnetic field change depending on the movement of the magnetizable switching body (11) in a stable position within the dosing chamber (18).

14. Device according to claim 13, **characterised by** a magnetic field sensor being a coil.

15. Device according to at least on of the claims 8 to 14, **characterized by** the magnetic field of the permanent magnet (12b) at the side of the outlet being concentrated via an outlet adapter (15) through the middle of the dosing chamber (18) and causing by its calotte-like shape (19) through the dosing chamber (18) an additional magnetic centralisation (17) of the switching body (11) at reaching a stable closing position in its calotte-like shape (19).

16. Device according to at least one of the claims 8 to 14, **characterised by** the magnetic field of the permanent magnet (12b) at the outlet is concentrated via an outlet adapter (15) and a quantum well tube (25) with calotte-like shape through the middle of the dosing chamber (18), and that the ferro-magnetic switching body (11) does not lay directly on the ferro-magnetic outlet adapter (15) and the adhesive force is adjusted by this in a defined manner.

17. Device according to at least one of the claims 8 to 15, **characterised by** a dosing valve (10) consisting of several separate dosing chambers (18), which feedings (20) and eductions (21) are connected by elastic or inelastic coupling elements (24), whereas in the dosing chambers separately from each other permanent and electro-magnetic fields are produced and depending on the elastic properties of the coupling elements (24) are addressed phase-shifted.

## Revendications

1. Procédé pour le dosage de fluides, en particulier de très petites quantités, à l'aide d'une chambre de dosage présentant une amenée et une évacuation et un corps de commutation situé dans la chambre de dosage, magnétisable et générant une variation de champ magnétique en se déplaçant, pour fermer ou ouvrir l'amenée ou l'évacuation, **caractérisé par** le fait
a) que l'on amène des fluides de propriétés rhéologiques connues ou inconnues sous pression dans la chambre de dosage (18) et,
b) à pression constante dans l'amenée (20) de la chambre de dosage (18),
c) que l'on commande le dosage des fluides par le corps de commutation (11) mobile axialement dans la chambre de dosage en mesurant le comportement de commutation dans le temps du corps de commutation (11) dans le fluide à doser et en le comparant avec un comportement de commutation de référence d'un fluide de propriétés rhéologiques connues, la variation de champ magnétique provoquée par le corps de commutation (11) étant détectée à l'aide d'un capteur de champ magnétique (16),
d) le comportement de commutation de référence étant déterminé au préalable à partir du comportement de commutation dans le temps de fluides connus de propriétés rhéologiques différentes connues ou du fluide à doser,
e) à partir de quoi on détermine la viscosité effective du fluide à doser et on commande le débit à travers la chambre de dosage (18) et donc le dosage.

2. Procédé selon la revendication 1, **caractérisé par le fait que** l'on génère par affaiblissement et renforcement de champs magnétiques permanents de polarité opposée qui définissent deux positions stables à l'intérieur de la chambre de dosage (18), au moyen d'une bobine (13) traversée par du courant et commandée électroniquement, des états de commutation discrets pour le corps de commutation (11) magnétisable mobile axialement dans une chambre de dosage (18) et que l'on détecte à l'aide d'un capteur de champ magnétique (16) la variation de champ magnétique provoquée par le corps de commutation (11) lors du déplacement du corps de commutation (11) dans une position stable.

3. Procédé selon la revendication 1, **caractérisé par le fait que** le comportement de commutation est défini par le temps entre une impulsion de commutation électromagnétique générée par la bobine (13) et l'arrêt du corps de commutation (11) dans une position de fermeture ou d'ouverture stable en fonction des fluides introduits dans la chambre de dosage (18).

4. Procédé selon la revendication 1 ou 3, **caractérisé par le fait que** le comportement de commutation est défini par le temps entre une impulsion de commutation électromagnétique générée par la bobine (13) et l'arrêt du corps de commutation (11) dans une position de fermeture ou d'ouverture stable en fonction d'une douille à puits de potentiel (25) d'épaisseur variable disposée côté sortie sur l'évacuation (21), qui provoque une force d'adhérence variable correspondante du corps de commutation (11) à l'évacuation (21).

5. Procédé selon les revendications 1 à 4, **caractérisé par le fait que** l'on détecte des contaminations de la chambre de dosage (18) par modification d'un comportement de commutation connu, en particulier une diminution des temps de commutation et une diminution de la variation de champ magnétique du corps de commutation (11) en fonction du fluide environnant.

6. Procédé selon la revendication 3 ou 4, **caractérisé par le fait que** l'on génère dans la bobine (13) une impulsion de courant ou de tension de très courte durée et que l'on détermine au moyen d'un dispositif d'évaluation la durée du comportement de commutation défini entre l'impulsion de courant ou de tension dans la bobine (13) et le maximum de la variation de champ magnétique mesurée dans le capteur de champ magnétique (16).

7. Procédé selon au moins l'une des revendications 1 à 6, **caractérisé par le fait que** l'on génère par une excitation à haute fréquence de la bobine (13) des champs électromagnétiques qui mettent le corps de commutation (11) en oscillations, les effets de chocs résultants dans la chambre de dosage (18) provoquant un mélange des fluides.

8. Dispositif pour le dosage de fluides avec un corps de commutation (11) mobile axialement dans une chambre de dosage (18) présentant une amenée (20) et une évacuation (21) et commutable électromagnétiquement par une bobine (13), **caractérisé par le fait que** le corps de commutation (11) peut être commandé par la bobine (13) seulement dans la position de fermeture ou d'ouverture de la chambre de dosage (18) par affaiblissement et renforcement de champs magnétiques permanents de polarité opposée générés par des aimants permanents (12a, 12b) et que l'on détecte à l'aide d'un capteur de champ magnétique (16) la variation de champ magnétique provoquée par le corps de commutation (11) lors du déplacement du corps de commutation (11) dans une position stable.

9. Dispositif selon la revendication 8, **caractérisé par le fait que** les aimants permanents (12a, 12b) sont dimensionnés de telle manière que le corps de commutation (11) magnétisable ne prenne une position stable que dans la position de fermeture ou d'ouverture de la chambre de dosage (18) et que la position stable du corps de commutation (11) reste inchangée par des influences mécaniques extérieures sur la vanne de dosage (10).

10. Dispositif selon la revendication 8 ou 9, **caractérisé par le fait que** le corps de commutation magnétisable est une bille ferromagnétique.

11. Dispositif selon la revendication 8 ou 9, **caractérisé par le fait que** les aimants permanents (12a, 12b) sont des aimants toriques ou annulaires.

12. Dispositif selon les revendications 8 à 11, **caractérisé par le fait que** la bobine (13) est disposée autour de la chambre de dosage (18) et génère un champ électromagnétique à l'intérieur de la chambre de dosage (18), la forme du champ électromagnétique affaiblissant ou renforçant une partie des champs magnétiques des aimants permanents (12a, 12b) en fonction du sens du courant dans la bobine (13).

13. Dispositif selon les revendications 8 à 12, **caractérisé par le fait qu'**un capteur de champ magnétique (16) est disposé autour de la chambre de dosage (18), dans lequel on saisit une variation de champ magnétique en fonction du déplacement du corps de commutation (11) magnétisé dans une position stable à l'intérieur de la chambre de dosage (18).

14. Dispositif selon la revendication 13, **caractérisé par le fait que** le capteur de champ magnétique est une bobine.

15. Dispositif selon au moins l'une des revendications 8 à 14, **caractérisé par le fait que** le champ magnétique de l'aimant permanent côté sortie (12b) est concentré au centre de la chambre de dosage (18) au moyen d'un adaptateur de sortie (15) et provoque en combinaison avec une douille amagnétique (17) et son contour en calotte (19) dirigé vers la chambre de dosage (18) un centrage magnétique supplémentaire du corps de commutation (11) à l'atteinte de la position de fermeture stable dans son contour en calotte (19).

16. Dispositif selon au moins l'une des revendications 8 à 14, **caractérisé par le fait que** le champ magnétique de l'aimant permanent côté sortie (12b) est concentré au centre de la chambre de dosage (18) au moyen d'un adaptateur de sortie (15) et d'une douille à puits de potentiel (25) à contour en calotte, que le corps de commutation (11) ferromagnétique ne repose pas directement sur l'adaptateur de sortie (15) et que l'on règle ainsi la force d'adhérence de manière définie.

17. Dispositif selon au moins l'une des revendications 8 à 15, **caractérisé par le fait que** la vanne de dosage (10) se compose de plusieurs chambres de dosage (18) séparées dont les amenées (20) et évacuations (21) sont reliées par des éléments de couplage (24) élastiques ou inélastiques, des champs permanents et électromagnétiques séparés étant générés dans les chambres de dosage et commandés en décalage de phase en fonction des propriétés élastiques des éléments de couplage (24).
